# EUROPÄISCHE PATENTANMELDUNG

(11) **EP 4 201 207 A1**
(43) Veröffentlichungstag der Anmeldung: **28.06.2023**
(21) Anmeldenummer: 22213506.3
(22) Anmeldetag: 14.12.2022
(51) Int. Cl.: A21B 1/28, A21B 1/26

(54) **BACKOFEN**

(30) Priorität: 27.12.2021 DE 102021215049
(71) Anmelder: BackNet GmbH, 33649 Bielefeld (DE)
(72) Erfinder: Dannenhauer, Bernd, 91550 Dinkelsbühl (DE); Adams, Christoph, 50259 Pulheim (DE)
(74) Vertreter: Rau, Schneck & Hübner Patentanwälte Rechtsanwälte PartGmbB

(57) **Zusammenfassung**

Ein Backofen (1) hat Backräume (2 bis 5) mit einer Oberhitze-Steinplatte (6) und einer Unterhitze-Steinplatte (7). Eine Backpausen-Wärmequelle (12) dient zum Aufheizen der Steinplatten (6, 7) über Verbrennungsgase (13) während einer Backpause, in der der Backraum (2 bis 5) nicht zum Backen genutzt wird. Eine Backphasen-Wärmequelle (17) dient zum Beheizen des Backraums (2 bis 5) zumindest auch während einer Backphase, in der der Backraum (2 bis 5) zum Backen genutzt wird. Es resultiert ein Backofen mit erweiterten Betriebsmöglichkeiten.

## Beschreibung

Die vorliegende Patentanmeldung nimmt die Priorität der deutschen Patentanmeldung DE 10 2021 215 049.7 in Anspruch, deren Inhalt durch Bezugnahme hierin aufgenommen wird.

Die Erfindung betrifft einen Backofen.

Ein derartiger Backofen in Form eines Etagen-Steinbackofens ist vom Markt her bekannt. Die DE 29 170 72 A1 offenbart ein Brennaggregat mit einem Druckzerstäuberbrenner zur Beheizung einer Koch- oder Bratfläche. Die WO 99/05457 A1 offenbart einen Brat- und/oder Backofen.

Es ist eine Aufgabe der vorliegenden Erfindung, einen Backofen der eingangs genannten Art derart weiterzubilden, dass dessen Betriebsmöglichkeiten erweitert sind.

Diese Aufgabe ist erfindungsgemäß gelöst durch einen Backofen mit den im Anspruch 1 angegebenen Merkmalen.

Erfindungsgemäß wurde erkannt, dass die Betriebsmöglichkeiten eines insbesondere rein holzbefeuerten Steinbackofens, der also ausschließlich eine holzbefeuerte Wärmequelle zum Beheizen der Steinplatten in Backpausen aufweist, deutlich verbessert werden können, wenn zusätzlich eine Backphasen-Wärmequelle bereitgestellt ist, die den mindestens einen Backraum auch während einer Backphase beheizen kann. Ein Backen kann mit einem derartigen Stein-Backofen dann nicht nur mit fallender Temperatur bei inaktiver Wärmequelle erfolgen. Es kann dann auch während der Backphase mit der Backphasen-Wärmequelle geheizt werden. Dies ermöglicht das Backen einer größeren Variation von Gebäcken. Durch Einsatz der Backphasen-Wärmequelle kann zudem eine Wiederaufheizzeit zum erneuten Backen mit dem Steinbackofen verkürzt werden. Bei dem Backofen kann es sich um einen industriellen Backofen oder um einen Backofen für einen Handwerksbetrieb handeln. Bei der Backpausen-Wärmequelle kann es sich um eine holzbefeuerte oder um eine gasbefeuerte Wärmequelle handeln. Die Backpausen-Wärmequelle kann insbesondere so gestaltet sein, dass die Verbrennungsgase, die von der Backpausen-Wärmequelle erzeugt werden, direkt durch den Backraum geführt werden.

Mit dem aufgrund des Vorhandenseins einer holzbefeuerten Backpausen-Wärmequelle und andererseits einer Backphasen-Wärmequelle hybrid gestalteten Backofen sind Backprogramme möglich, bei denen
- die Backphasen-Wärmequelle auch in Backpausen die Backpausen-Wärmequelle bei der Aufheizung der Steinplatten unterstützt;
- die Backphasen-Wärmequelle während einer Backphase die Steinplatten beheizt;
- die Backphasen-Wärmequelle während der Backphase inaktiv ist;
- die Backpausen-Wärmequelle auch während der Backpausen inaktiv ist, so dass der Backofen ausschließlich über die Backphasen-Wärmequelle beheizt wird.

Da zusätzlich die Backphasen-Wärmequelle genutzt werden kann, ist eine Ausführung des Backofens nach Anspruch 2 mit einer vergleichsweise dünnen Oberhitze-Steinplatte möglich. Eine Plattendicke der Oberhitze-Steinplatte kann höchstens 150 mm betragen, kann höchstens 120 mm betragen, kann höchstens 100 mm betragen, und beträgt regelmäßig mehr als 50 mm. Der Einsatz dünner Steinplatten reduziert die Produktionskosten des Backofens.

Eine Ausführung als Etagen-Backofen nach Anspruch 3 führt zu einem Backofen mit hohem Durchsatz. Es können individuelle Backpausen-Wärmequellen für jeden der Etagen-Backräume vorgesehen sein. Für jeden Backraum kann insbesondere auch eine Mehrzahl von Backpausen-Wärmequellen vorgesehen sein. Es kann eine gemeinsame Backphasen-Wärmequelle für mehrere oder alle Etagen-Backräume vorgesehen sein. Alternativ kann der Backofen auch mit genau einem (Etagen-)Backraum ausgestattet sein.

Ein Pelletsbrenner nach Anspruch 4 hat sich als Backpausen-Wärmequelle bewährt. Der Pelletsbrenner verbrennt insbesondere Holzpellets.

Ausgestaltungen der Backphasen-Wärmequellen nach Anspruch 5 haben sich ebenfalls bewährt. Alternativ oder zusätzlich kann auch eine elektrische Backphasen-Wärmequelle zum Einsatz kommen.

Eine Heizgasführung nach Anspruch 6 hat sich ebenfalls in der Praxis bewährt. Die Heizgasführung kann mindestens einen Umwälzventilator als Bestandteil aufweisen. Der mindestens eine Heizgas-Wärmetauscher kann wiederum mindestens einen Heizgas-Führungskanal aufweisen, der direkt von einer der Steinplatten begrenzt ist. Eine Auswahl individueller, über die Backphasen-Wärmequelle zu beheizender Backräume kann über eine Klappen- bzw. Drosselsteuerung innerhalb von Führungskanälen der Heizgasführung erfolgen.

Ein Heizgas-Wärmetauscher nach Anspruch 7 ermöglicht eine effektive Beheizung der jeweiligen Steinplatte.

Eine Zuordnung eines Heizgas-Wärmetauschers nach Anspruch 8 ermöglicht die Beheizung sowohl einer Oberhitze-Steinplatte als auch einer Unterhitze-Steinplatte des darüber liegenden Backraums über ein und denselben Heizgas-Wärmetauscher. Dieser Heizgas-Wärmetauscher kann insbesondere als Heizgas-Führungskanal ausgeführt sein, der von der Oberhitze-Steinplatte eines der Backräume und von der Unterhitze-Steinplatte des darüber liegenden Backraums begrenzt ist. Alternativ ist es möglich, eine entsprechende Heizgas-Wärmetauscher-Zuordnung über den Oberhitze- bzw. Unterhitze-Steinplatten getrennt zugeordnete Heizregister vorzunehmen.

Ein getrennter Verlauf einerseits der Verbrennungsgas-Führung und andererseits der Heizgasführung nach Anspruch 9 ermöglicht eine unabhängige Steuerung der Gasführungen.

Ein Dampferzeuger nach Anspruch 10 verbessert eine Backperformance des Backofens weiterhin. Der Dampferzeuger kann von der Backphasen-Wärmequelle und/oder von der Backpausen-Wärmequelle beheizt werden. Es resultiert ein entsprechend energieeffizienter Backofen. Hierzu kann ein Wärmetauscher genutzt werden, der von der Backpausen-Wärmequelle beheizt wird. Im einfachsten Fall kann der Wärmetauscher gebildet sein durch eine Wandung eines Kanals des Dampferzeugers, indem diesem Wasser zugeführt wird.

Ein Ausführungsbeispiel der Erfindung wird nachfolgend anhand der Zeichnung näher erläutert. In dieser zeigen:
- Fig. 1: schematisch eine perspektivische Ansicht eines industriellen Etagen-Backofens schräg von oben, wobei Gehäuseelemente weggelassen sind;
- Fig. 2: einen Schnitt gemäß Linie II-II in Fig. 1;
- Fig. 3: eine Ausschnittsvergrößerung des Details III in Fig. 2; und
- Fig. 4: einen Schnitt gemäß Linie IV-IV in Fig. 1.

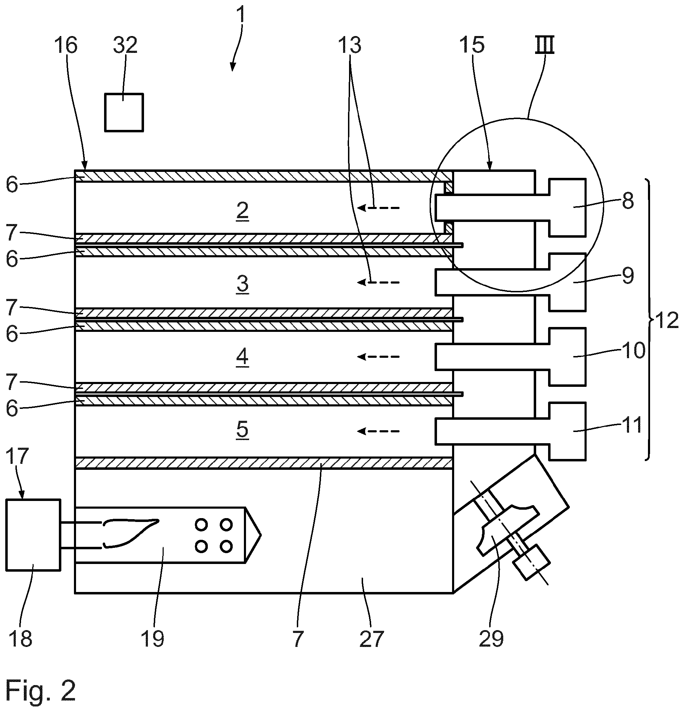

Ein industrieller Backofen 1 ist als Etagen-Backofen mit insgesamt vier Backräumen 2, 3, 4, 5 ausgeführt, die in der Fig. 2 von oben nach unten durchnummeriert sind. Je nach Ausführung des Backofens 1 kann auch eine andere Anzahl von Backräumen zwischen genau einem Backraum und beispielsweise bis zu acht oder zehn Backräumen vorliegen.

Die Backräume 2 bis 5 sind übereinander angeordnet.

Jeder der Backräume 2 bis 5 hat eine Oberhitze-Steinplatte 6 und eine Unterhitze-Steinplatte 7. Die Anordnung der Steinplatten 6, 7 insbesondere dort, wo diese bei übereinanderliegenden Backräumen direkt benachbart scheinen, ist in der Fig. 2 stärker schematisch dargestellt.

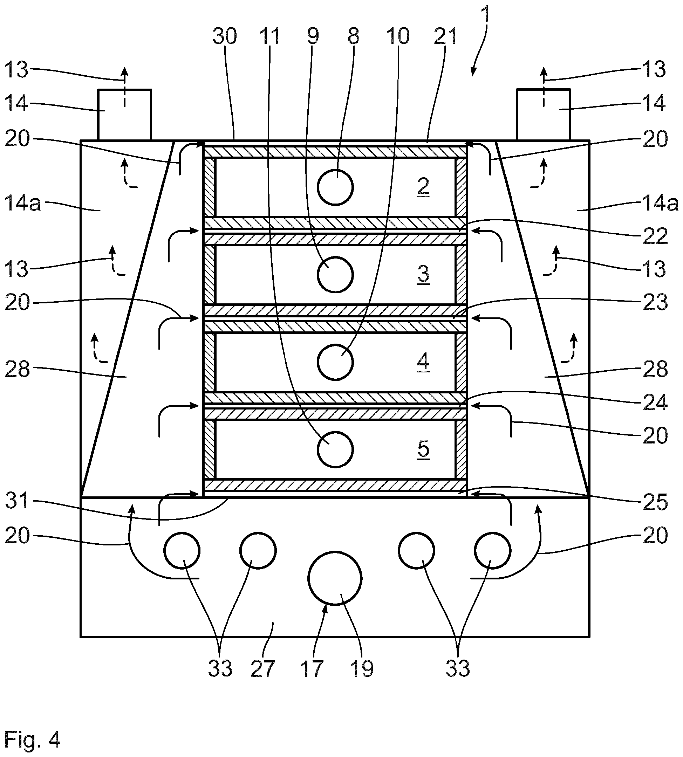

Der Backofen 1 hat insgesamt vier Pelletsbrenner 8, 9, 10 und 11, die jeweils einen der Backräume 2 bis 5 zugeordnet sind. Die Pelletsbrenner 8 bis 11 stellen eine holzbefeuerte Backpausen-Wärmequelle 12 des Backofens 1 dar. Diese Backpausen-Wärmequelle 12 dient zum Aufheizen der Steinplatten 6, 7 über Verbrennungsgase 13 (vgl. Fig. 2 und 4) während einer Backpause, in der die Backräume 2 bis 5 nicht zum Backen genutzt werden. Bei einer alternativen Ausführung des Backofens 1 kann auch eine gemeinsame Backpausen-Wärmequelle in Form beispielsweise eines Pelletsbrenners für einige oder alle Etagen-Backräume des Backofens 1 zum Einsatz kommen. Bei einer weiteren, alternativen Ausführung des Backofens 1 kann genau einem der Backräume 2 bis 5 auch eine Mehrzahl von Backpausen-Wärmequellen in Form beispielsweise jeweils eines Pelletsbrenners zugeordnet sein.

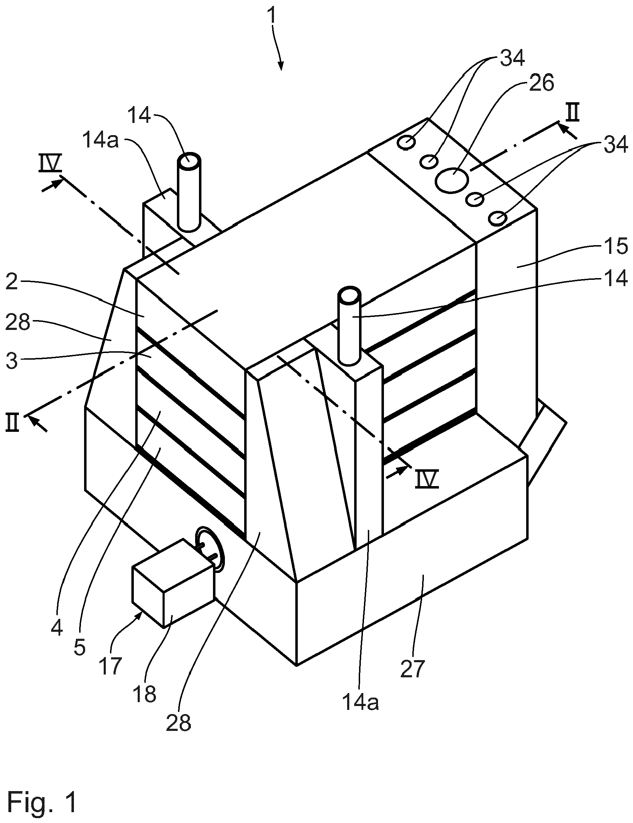

Eine Verbrennungsgas-Führung dient zum Führen der Verbrennungsgase 13 der Backpausen-Wärmequelle 12 hin zu Verbrennungsgas-Abluftkaminen 14, die beiderseits der Backräume 2 bis 5 angeordnet sind (vgl. Fig. 1). Teil der Verbrennungsgas-Führung zwischen den Backräumen 2 bis 5 und den Verbrennungsgas-Abluftkaminen 14 sind zwei seitliche Rauchgaskanäle 14a.

Die Verbrennungsgase 13 werden von den jeweiligen Pelletsbrennern 8 bis 11 zunächst von einer Backofen-Rückseite 15 hin zu einer türseitigen Backofen-Vorderseite 16 (vgl. Fig. 2) transportiert und werden dann durch entsprechende seitliche Öffnungen in den Backräumen 2 bis 5 hin nach beiden Seiten zu den Verbrennungs-Abluftkaminen 14 abtransportiert (vgl. auch Fig. 4). Über eine Klappensteuerung, die einzelne der Backräume 2 bis 5 von der Verbrennungsgas-Führung abkoppelt, kann erreicht werden, dass nur einzelne der Backräume 2 bis 5 über die Pelletsbrenner 8 bis 11 beheizt werden, beispielsweise die beiden unteren Backräume 4 und 5 über Pelletsbrenner 10 und 11, wobei dann die Pelletsbrenner 8 und 9 inaktiv sind und die Backräume 2 und 3 von der Verbrennungsgas-Führung durch Schließen entsprechender Klappen abgekoppelt sind.

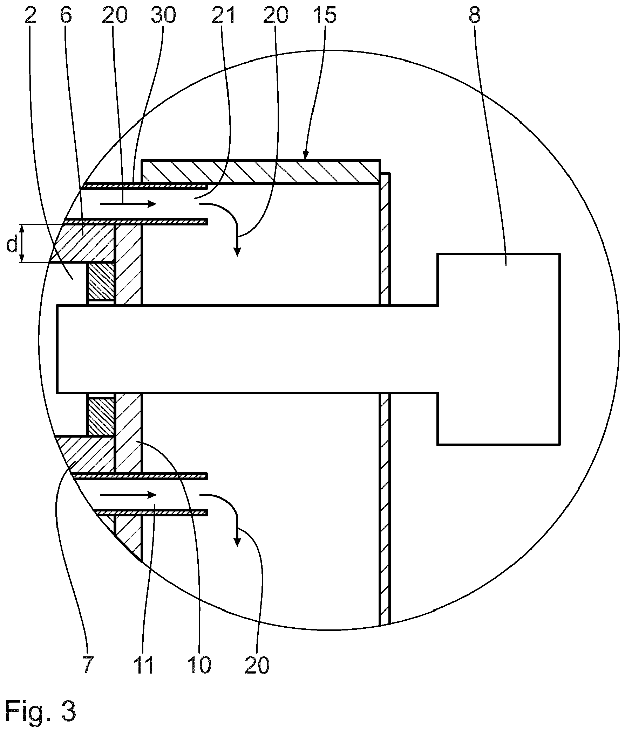

Die Oberhitze-Steinplatten 6 haben eine Plattendicke d (vgl. Fig. 3), die kleiner ist als 160 mm. Je nach Ausführung der Oberhitze-Steinplatten 6 kann diese Plattendicke d kleiner sein als 150 mm, kann kleiner sein als 120 mm, und kann auch kleiner sein als 100 mm. Die Plattendicke ist regelmäßig größer als 50 mm.

Der Backofen 1 hat weiterhin eine Backphasen-Wärmequelle 17 mit einem Öl- oder Gasbrenner 18 und einer Brennkammer 19. Die Backphasen-Wärmequelle 17 dient zum Beheizen der Backräume 2 bis 5 zumindest auch während einer Backphase, in der die Backräume 2 bis 5 zum Backen genutzt werden.

Alternativ zu einer Backphasen-Wärmequelle 17 mit einem Öl- oder Gasbrenner 18 kann die Backphasen-Wärmequelle 17 auch als elektrische Backphasen-Wärmequelle ausgeführt sein.

Eine Heizgasführung dient zum Führen von Heizgas 20 (vgl. Fig. 3 und 4) von der Brennkammer 19 der Backphasen-Wärmequelle 17 über Heizgas-Führungskanäle 21 bis 25, die ober- und unterhalb der Backräume 2 bis 5 angeordnet sind, hin zu einem an der Backofen-Rückseite 15 angeordneten Heizgas-Abluftkamin 26 (vgl. Fig. 1). Die Heizgas-Führungskanäle 21 bis 25 stellen Heizgas-Wärmetauscher der Heizgasführung dar.

Der Öl- oder Gasbrenner 18 ist an der Backofen-Vorderseite 16 in einem Boden-Gehäusebereich 27 des Backofens 1 angeordnet. Der Boden-Gehäusebereich 27 kommuniziert mit seitlichen Führungskanal-Abschnitten 28 der Heizgasführung vom Boden-Gehäuseabschnitt 27 hin zu den Heizgas-Führungskanälen 21 bis 25. Die Heizgas-Führungskanäle 21 bis 25 kommunizieren wiederum mit dem Heizgas-Abluftkamin 26 über entsprechende Strömungskanäle in der Backofen-Rückseite 15.

Ein Umwälzventilator 29 ist ein Bestandteil der Heizgasführung.

Die Heizgas-Führungskanäle 21 bis 25 sind mindestens zu einer Seite hin direkt von einer der Oberhitze-Steinplatten 6 und/oder einer der Unterhitze-Steinplatten 7 begrenzt. Der Heizgas-Führungskanal 21 ist nach oben hin von einer oberen Gehäusewand 30 des Backofens 1 begrenzt und nach unten hin von der Oberhitze-Steinplatte 6 des Backraums 2. Der Heizgas-Führungskanal 22 ist nach oben hin von der Unterhitze-Steinplatte 7 des Backraums 2 und nach unten hin von der Oberhitze-Steinplatte 6 des Backraums 3 begrenzt. Der Heizgas-Führungskanal 23 ist nach oben hin von der Unterhitze-Steinplatte 7 des Backraums 3 und nach unten hin von der Oberhitze-Steinplatte 6 des Backraums 4 begrenzt. Der Heizgas-Führungskanal 24 ist nach oben hin von der Unterhitze-Steinplatte 7 des Backraums 4 und nach unten hin von der Oberhitze-Steinplatte 6 des Backraums 5 begrenzt. Der Heizgas-Führungskanal 25 ist nach oben hin von der Unterhitze-Steinplatte 7 und nach unten hin von einer Trennwand 31 hin zum Boden-Gehäusebereich 27 begrenzt.

Der Heizgas-Führungskanal 21 stellt einen Heizgas-Wärmetauscher dar, der der Oberhitze-Steinplatte 6 des Backraums 2 zugeordnet ist. Der Heizgas-Führungskanal 22 stellt einen Heizgas-Wärmetauscher dar, der einerseits der Unterhitze-Steinplatte 7 des Backraums 2 und andererseits der Oberhitze-Steinplatte 6 des Backraums 3 zugeordnet ist. Der Heizgas-Führungskanal 23 stellt einen Heizgas-Wärmetauscher dar, der einerseits der Unterhitze-Steinplatte 7 des Backraums 3 und andererseits der Oberhitze-Steinplatte 6 des Backraums 4 zugeordnet ist. Der Heizgas-Führungskanal 24 stellt einen Heizgas-Wärmetauscher dar, der einerseits der Unterhitze-Steinplatte 7 des Backraums 4 und andererseits der Oberhitze-Steinplatte 6 des Backraums 5 zugeordnet ist. Der Heizgas-Führungskanal 25 stellt einen Heizgas-Wärmetauscher dar, der der Unterseite-Steinplatte 7 des Backraums 5 zugeordnet ist.

Innerhalb der Heizgasführung ist eine Auswahl individueller, über die Backphasen-Wärmequelle 17 zu beheizender Backräume 2 bis 5 über eine nicht näher dargestellte Klappen- bzw. Drosselsteuerung innerhalb der verschiedenen Strömungs- bzw. Führungskanäle der Heizgasführung gegeben. Diese Klappen- bzw. Drosselsteuerung steht mit einer in der Fig. 2 schematisch dargestellten zentralen Steuer- bzw. Regeleinrichtung 32 des Backofens 1 in Signalverbindung. Mit der Steuer- bzw. Regeleinrichtung 32 steht auch eine in der Zeichnung nicht näher dargestellte Eingabeeinheit sowie eine Anzeigeeinheit in Signalverbindung. Diese Einheiten können in einem Touch Screen integriert sein.

Die Verbrennungsgas-Führung der Backpausen-Wärmequelle 12 verläuft von der Heizgasführung der Backphasen-Wärmequelle 17 getrennt.

Der Backofen 1 hat weiterhin einen Dampferzeuger zur Erzeugung von Backschwaden. Dieser Dampferzeuger ist durch eine Mehrzahl von Wärmetauscher-Kanälen 33 gebildet, in denen Wasser verdampft werden kann. Beheizt werden die Wärmetauscher-Kanäle 33 über den Öl- oder Gasbrenner 18 der Backphasen-Wärmequelle 17. Über eine entsprechende Leistungsführung und eine Klappen- bzw. Drosselsteuerung stehen die Wärmetauscher-Kanäle 33 des Dampferzeugers mit den Backräumen 2 bis 5 sowie mit einer entsprechenden Schwaden-Abführung in Fluidverbindung. Entsprechende Dampfleitungen 34 in der Backofen-Rückseite 15 sind in der Fig. 1 angedeutet.

Die Backräume 2 bis 5 und insbesondere die obere Gehäusewand 30 sowie der Boden-Gehäusebereich 27 und auch die Backofen-Rückseite 15 und die Backofen-Vorderseite 16 sind mit entsprechendem Dämmmaterial bzw. wärmedämmendem Türmaterial wärmeisoliert.

Aufgrund der alternativ oder gemeinsamen nutzbaren Wärmequellen 12, 17 ergibt sich ein hybrider Backofen 1, mit dem verschiedenste Backprogramme abgearbeitet werden können. Im Rahmen dieser Backprogramme kann beispielsweise
- die Backphasen-Wärmequelle 17 auch in Backpausen die Backpausen-Wärmequelle 12 bei der Aufheizung der Steinplatten 6, 7 unterstützen; und/oder
- die Backphasen-Wärmequelle 17 während einer Backphase die Steinplatten 6, 7 beheizen; und/oder
- die Backphasen-Wärmequelle 17 während der Backphase inaktiv sein; und/oder
- die Backpausen-Wärmequelle 12 auch während bestimmter Backphasen inaktiv sein, so dass der Backofen 1 ausschließlich über die Backphasen-Wärmequelle 17 beheizt wird.

Der hybride Backofen 1 kann auch so betrieben werden, dass ausschließlich die Backpausen-Wärmequelle betrieben wird.

## Patentansprüche

1. Backofen (1)
- mit mindestens einem Backraum (2 bis 5) mit mindestens einer Oberhitze-Steinplatte (6) und mindestens einer Unterhitze-Steinplatte (7),
- mit einer Backpausen-Wärmequelle (12) zum Aufheizen der Steinplatten (6, 7) über Verbrennungsgase (13) während einer Backpause, in der der Backraum (2 bis 5) nicht zum Backen genutzt wird,
- mit einer Backphasen-Wärmequelle (17) zum Beheizen des Backraums (2 bis 5) zumindest auch während einer Backphase, in der der Backraum (2 bis 5) zum Backen genutzt wird.

2. Backofen nach Anspruch 1, **dadurch gekennzeichnet, dass** eine Oberhitze-Steinplatte (6) des Backraums (2 bis 5) eine Plattendicke (d) von weniger als 160 mm aufweist.

3. Backofen nach Anspruch 1 oder 2, **gekennzeichnet durch** eine Ausführung als Etagen-Backofen mit mindestens zwei der Backräume (2 bis 5), die übereinander angeordnet sind.

4. Backofen nach einem der Ansprüche 1 bis 3, **dadurch gekennzeichnet, dass** es sich bei der Backpausen-Wärmequelle (12) um mindestens einen Pelletsbrenner handelt.

5. Backofen nach einem der Ansprüche 1 bis 4, **dadurch gekennzeichnet, dass** es sich bei der Backphasen-Wärmequelle (17) um eine gas- und/oder ölbefeuerte Wärmequelle handelt.

6. Backofen nach einem der Ansprüche 1 bis 5, **gekennzeichnet durch** eine Heizgasführung zum Führen von Heizgas (20) von der Backphasen-Wärmequelle (17) über mindestens einen Heizgas-Wärmetauscher (21 bis 25), der dem Backraum (2 bis 5) zugeordnet ist, hin zu einem Abluftkamin (26).

7. Backofen nach Anspruch 6, **dadurch gekennzeichnet, dass** der mindestens eine Heizgas-Wärmetauscher (21 bis 25) mindestens einer der Oberhitze-Steinplatten (6) und/oder mindestens einer der Unterhitze-Steinplatten (7) zugeordnet ist.

8. Backofen nach mindestens einem der Ansprüche 2 bis 7, **dadurch gekennzeichnet, dass** ein und derselbe Heizgas-Wärmetauscher (21 bis 25) der Oberhitze-Steinplatte (6) eines der Backräume (3 bis 5) und der Unterhitze-Steinplatte (7) des darüber liegenden Backraums (2 bis 4) zugeordnet ist.

9. Backofen nach einem der Ansprüche 1 bis 8, **gekennzeichnet durch** eine Verbrennungsgas-Führung der Backpausen-Wärmequelle (12), die von einer Heizgasführung der Backphasen-Wärmequelle (17) getrennt verläuft.

10. Backofen nach einem der Ansprüche 1 bis 9, **gekennzeichnet durch** einen Dampferzeuger (33) zur Erzeugung von Backschwaden.
